# EUROPEAN PATENT SPECIFICATION

(11) **EP 4 079 521 B1**
(45) Date of publication and mention of the grant of the patent: **28.10.2026**
(21) Application number: 20903571.6
(22) Date of filing: 11.12.2020
(51) Int. Cl.: B32B 27/36, B32B 7/12, B32B 27/08, B65D 65/40

(54) **MULTILAYER BODY**
MEHRSCHICHTIGER KÖRPER
CORPS MULTICOUCHE

(30) Priority: 18.12.2019 JP 2019228058
(43) Date of publication of application: 26.10.2022
(73) Proprietor: TOPPAN INC., Tokyo 110-0016 (JP)
(72) Inventor: KUDO, Shigeki, Tokyo 110-0016 (JP); KADOYA, Haruna, Tokyo 110-0016 (JP)
(74) Representative: Hoffmann Eitle
(86) International application number: PCT/JP2020/046376
(87) International publication number: WO 2021/125098

(56) References cited:
- WO-A1-2016/136962
- WO-A1-2018/016521
- WO-A1-2018/132442
- WO-A1-2018/150997
- WO-A2-2008/008381
- JP-A- 2015 196 512
- JP-A- 2019 171 792

## Description

### [Technical Field]

The present invention relates to laminates.

### [Background Art]

Films of polyester, typified by polyethylene terephthalate, have excellent low adsorptivity to organic compounds contained in, for example, chemicals, pharmaceuticals, and foods. In terms of the above property, such a film is suitable for use as the innermost sealant layer of a packaging bag.

WO 2008/008381 A2 claims a multilayer film comprising a) a substrate comprising a polymeric base layer, and on the substrate b) a heat seal layer comprising a polylactic acid polymer. As one alternative embodiment, claim 1 of the document provides for the substrate a) further comprising an adhesion promoter layer on a surface of the polymeric base layer between and adjacent the polymer base layer and the heat seal layer. According to the description, the polylactic acid polymer may be amorphous, or it may have substantial crystallinity, and in the latter case it is typically at most 50% crystalline.

WO 2018/132442 A1 describes a polyester film, i.e. a substrate, and a heat seal film provided on the substrate. The heat seal film comprises a copolyester resin component comprising a blend of a semi-crystalline copolyester resin and an amorphous copolyester resin. The semi-crystalline copolyester resin component may be present in an amount of between about 60% to about 99.9% by weight of the heat seal resin composition. It is mentioned in the description of the document that various additives known to one skilled in the art can be present in the respective film layers including the presence of tie layers.

### [Citation List]

### [Patent Literature]

PTL 1: JP 2004-530000 A

### [Summary of Invention]

### [Technical Problem]

Unfortunately, mechanical properties of polyester films are deteriorated by acidic or alkaline hydrolysis. Therefore, when such a film is used as the innermost layer of a packaging bag, there is a limitation on the type of substances that can be contained in the bag. Further studies are needed to produce packaging bags for, for example, toiletries, such as shampoo and detergents, which are generally considered to be stored for a long period of time.

The present invention has been made in view of the above circumstances. The present invention aims to provide a laminate that includes a sealant layer comprised of a polyester film and that can be used to form a packaging bag suitable for long-term storage of acidic or alkaline substances.

### [Solution to Problem]

The present invention provides a laminate for forming a bag for use as packaging of an acidic or alkaline substance, the laminate including, in sequence: a substrate layer; an adhesive layer; and a sealant layer, wherein the sealant layer includes a first polyester film, and a second polyester film, the second polyester film is so disposed as to be farther away from the adhesive layer than the first polyester film, the first polyester film has a crystallinity of 20 to not less than 50%, the crystallinity of the first polyester film being defined based on a first absorbance at a first wavenumber of 1409 cm⁻¹, a second absorbance at a second wavenumber of 1370 cm⁻¹, a third absorbance at a third wavenumber of 1340 cm⁻¹, a first constant, and a second constant, the first to third absorbances and the first and second constants being determined based on Fourier transform infrared (FT-IR) analysis, which uses a reflection method, on at least the first polyester film, the crystallinity of the first polyester film being expressed in accordance with the following formulas (1) and (2): ${I}_{1409} = p 1 \times {I}_{1340} + p 2 \times {I}_{1370}$ (Formula 1) $C = p 1 \times \left({I}_{1340}/{I}_{1409}\right) \times 100$ (Formula 2) where
C represents the crystallinity in percent,
I₁₄₀₉ represents the first absorbance at the first wavenumber,
I₁₃₇₀ represents the second absorbance at the second wavenumber,
I₁₃₄₀ represents the third absorbance at the third wavenumber,
p1 represents the first constant, and
p2 represents the second constant,
where
1409 cm⁻¹: a normalization band,
1370 cm⁻¹: a cis-conformer band (derived from an amorphous phase), and
1340 cm⁻¹: a trans-conformer band (trans conformation absorption band; derived from a crystal phase), and the second polyester film has a crystallinity of 15% or less.

The present invention relates in particular to a laminate that includes a specific polyester film as a sealant layer. A packaging bag formed of this laminate has suitable resistance to acidic or alkaline substances.

In the laminate of the present invention, the sealant layer may have a thickness of 15 µm or more.

In the laminate of the present invention, the first polyester film and the second polyester film may both have a thickness of 5 µm or more.

In the laminate of the present invention, the substrate layer may be comprised of a third polyester film.

In the laminate of the present invention, the third polyester film of the substrate layer may have a first surface and a second surface opposite to the first surface and have a vapor deposited layer of inorganic oxide disposed on at least one of the first surface and the second surface.

The laminate of the present invention may have a water vapor transmission rate of 5 g/m²/day or less.

The laminate of the present invention may have an oxygen transmission rate of 1 cc/m²/day or less.

In the laminate of the present invention, the substance may contain a surfactant.

### [Advantageous Effects of Invention]

The present invention provides a laminate that includes a sealant layer comprised of two polyester films and that can be used for forming a packaging bag suitable for long-term storage of acidic or alkaline substances.

### [Brief Description of Drawings]

Fig. 1 is a schematic cross-sectional view illustrating a laminate according to an embodiment of the present invention.
Fig. 2 is a schematic cross-sectional view of a laminate according to another embodiment of the present invention.

### [Description of Embodiments]

Embodiments of the present invention will be described in detail. The present invention is not limited to the following embodiments.

### <Laminate>

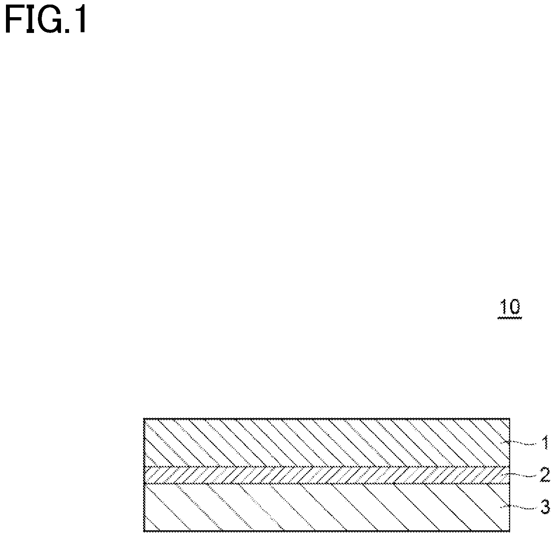

Fig. 1 is a schematic cross-sectional view illustrating a laminate according to an embodiment not representing the present invention. A laminate 10 of the present embodiment includes a substrate layer 1, an adhesive layer 2, and a sealant layer 3 in this order.

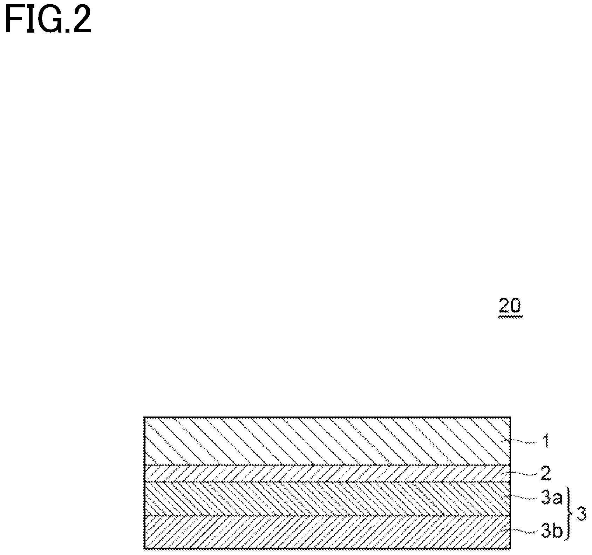

Fig. 2 is a schematic cross-sectional view of a laminate according to an embodiment of the present invention. A laminate 20 of this other embodiment includes a substrate layer 1, an adhesive layer 2, and a sealant layer 3 including a first polyester film 3a and a second polyester film 3b, in this order.

### [Substrate Layer]

A substrate layer is a film (base film) serving as a support. Examples of such a film include a polyester film, a polyolefin film, and a polyamide film. The substrate layer may be comprised of a selected one of these films. Alternatively, the substrate layer may be a laminate of two or more films each being a selected one of the above films.

From the viewpoint of improving gas barrier properties to, for example, water vapor and oxygen, the substrate layer may have a vapor deposited layer of inorganic oxide disposed on at least one of its surfaces. The vapor deposited layer of inorganic oxide provides good barrier properties while not affecting the recyclability of the laminate because of its extremely small thickness. Examples of the inorganic oxide include aluminum oxide, silicon oxide, magnesium oxide, and tin oxide. From the viewpoint of transparency and barrier properties, the inorganic oxide may be selected from the group consisting of aluminum oxide, silicon oxide, and magnesium oxide. The thickness of the vapor deposited layer of inorganic oxide may be preferably 5 nm or more and 100 nm or less, and more preferably 10 nm or more and 50 nm or less. The thickness of the vapor deposited layer of inorganic oxide being 5 nm or more provides good barrier properties, and when the thickness thereof is 100 nm or less, the flexibility of the laminate can be maintained easily. The vapor deposited layer may be formed by, for example, physical vapor deposition or chemical vapor deposition.

Since the sealant layer is comprised of at least two polyester films, using a polyester film as the substrate layer (i.e., using a substrate layer comprised of a polyester film) results in the material of all the films of the laminate being polyester. The recyclability of the laminate is further improved when its components are made of the same material. From this viewpoint, the substrate layer may be comprised of a polyester film. To sufficiently perform functions as a substrate layer, the polyester film may be a film of, for example, polybutylene terephthalate, polybutylene naphthalate, or polyethylene terephthalate. These polyesters may be crystalline polyesters.

From the viewpoint of reducing the environmental load, the substrate layer may contain a biomass polyester resin made using a biomass-derived ethylene glycol as a diol unit.

From the viewpoint of reducing the environmental load, the substrate layer may contain a regenerated polyester resin. Examples of regenerated polyester resins include chemically recycled polyester resins, which are produced by chemically recycling containers made from a polyester resin composed primarily of ethylene terephthalate units, and mechanically recycled polyester resins, which are produced by mechanically recycling containers made from a polyester resin composed primarily of ethylene terephthalate units.

The substrate layer may include a plurality of polyester films. In this case, the polyester films may be the same as or different from each other. In addition, at least one of the polyester films may have a vapor deposited layer of inorganic oxide disposed on its surface.

The thickness of the substrate layer may be preferably 5 µm to 1 mm, more preferably 5 to 800 µm, and even more preferably 5 to 500 µm. In the case where the substrate layer includes a plurality of films described above, the total thickness of these films may be within the above range.

In terms of gas barrier properties and water vapor barrier properties, the laminate may further include a metal layer (metal foil) in place of, or in addition to, a vapor deposited layer of inorganic oxide. That is, the laminate may further include a metal layer between the substrate layer and the adhesive layer.

The metal layer may be a metal foil composed of, for example, aluminum or stainless steel. From the viewpoint of humidity resistance, processability such as ductility and malleability, cost, and the like, an aluminum foil is preferable. As the aluminum foil, a general-purpose soft aluminum foil can be used. Among others, an iron-containing aluminum foil is preferred in view of having good pinhole resistance as well as ductility and malleability during forming.

In the case where the metal layer is provided, its thickness may be preferably 7 to 50 µm and more preferably 9 to 15 µm in view of barrier properties, pinhole-resistance, and formability.

### [Adhesive Layer]

The adhesive component of the adhesive layer may, for example, be a two-part curable type polyurethane adhesive, in which a bifunctional or higher functional aromatic or aliphatic isocyanate compound as a curing agent is reacted with a base resin, such as polyester polyol, polyether polyol, or acrylic polyol.

The adhesive layer can be formed by applying the adhesive component to the substrate layer, followed by drying. When a polyurethane adhesive is used, the polyurethane adhesive is applied to the substrate layer, followed by aging at 40°C for 4 days or more, for example. This advances the reaction of the hydroxyl group of the base resin with the isocyanate group of the curing agent, thus achieving firm adhesion.

From the viewpoint of adhesion, followability, formability, and the like, the thickness of the adhesive layer may be preferably 2 to 50 µm and more preferably 3 to 20 µm.

### [Sealant layer]

The sealant layer is a layer that includesat least two polyester films as described above and imparts sealability to the laminate by heat sealing.

The polyester films used as the sealant layer have a specific crystallinity. The crystallinity of the polyester films can be obtained by a process including performing FT-IR analysis using a reflection method and determining crystallinity using the formulas (1) and (2) below. Note that a first constant p1 and a second constant p2 can be determined by subjecting an amorphous PET film and crystalline PET film to FT-IR analysis, substituting I₁₃₄₀, I₁₃₇₀, and I₁₄₀₉ into the following Formula 1, and solving simultaneous equations. ${I}_{1409} = p 1 \times {I}_{1340} + p 2 \times {I}_{1370}$ (Formula 1) $C = p 1 \times \left({I}_{1340}/{I}_{1409}\right) \times 100$ (Formula 2) where
C represents the crystallinity in percent,
I₁₄₀₉ represents absorbance at a wavenumber of 1409 cm⁻¹,
I₁₃₇₀ represents absorbance at a wavenumber of 1370 cm⁻¹, and
I₁₃₄₀ represents absorbance at a wavenumber of 1340 cm⁻¹.

The FT-IR analysis using a reflection method can be performed on the polyester film as follows.

The measurement surface of the polyester film is brought into contact with a prism, and the absorbance of the polyester film is measured using a single-reflection ATR measuring device. The prism may be zinc selenide (ZnSe), germanium (Ge), or the like. The absorbance of the polyester film at each peak is calculated using, as a baseline (zero point), a straight line connecting a first point and a second point, the first point indicating the absorbance at a wavenumber from which the peak of a wavenumber of 1409 cm⁻¹ rises from the high-wavenumber side of the absorption spectrum, the second point indicating the absorbance at a wavenumber from which the peak of a wavenumber of 1340 cm⁻¹ rises from the low-wavenumber side of the absorption spectrum.

The sealant layer includes a polyester film (first polyester film) having a crystallinity of 20 to 50%. The crystallinity of 20% or more reduces the extent to which the mechanical properties of the polyester film are deteriorated due to acidic or alkaline substances contained in a packaging bag. Polyesters generally undergo hydrolysis due to acidic or alkaline substances and will have degraded mechanical properties. If this deterioration proceeds in the sealant layer of the laminate, the sealant layer may break under pressure from outside the packaging bag or upon impact when the packaging bag is dropped or the like. Whereas the extent of the above deterioration is larger particularly when the polyester film has a lower crystallinity, a polyester film having a crystallinity of 20% or more reduces the extent of the deterioration. On the other hand, a polyester film having a crystallinity of 50% or less enables the sealant layer to have a sufficient seal strength when heat sealed. The mechanism by which sealing of the polyester film occurs includes bonding at the amorphous parts thereof, which are fluidized when heated to a glass transition temperature or higher, and bonding at the crystalline parts thereof, which are fluidized when heated to a melting point or more. When the polyester film has an excessively high crystallinity, bonding due to fluidization of the amorphous parts does not occur. In this case, the polyester film is particularly inferior in low-temperature sealability, which makes it difficult to obtain a sufficient seal strength for a packaging bag. If the sealant layer has an insufficient seal strength, pressure from outside a packaging bag or impact when the packaging bag is dropped or the like would cause sealed surfaces to separate, resulting in the packaging bag leaking its contents. In this respect, setting the crystallinity of the polyester film as a sealing surface to 50% or less enables the sealant layer to have a sufficient seal strength for a packaging bag. In light of this, the crystallinity of the first polyester film may be preferably 20 to 45% and more preferably 25 to 40%.

The sealant layer further includes a second polyester film so disposed as to be farther away from the adhesive layer than the first polyester film is, that is, on a sealing surface side of the laminate. The second polyester film has a crystallinity of 15% or less. In this case, the second polyester film has sufficient fluidity when heated to a glass transition temperature or higher, which means that the sealant layer has improved low-temperature sealability and thus is excellent in bag-forming suitability, filling suitability (in particular, high-speed filling suitability in continuous filling), and the like. From this viewpoint, the second polyester film may have a crystallinity of 10% or less. The lower limit on the crystallinity of the second polyester film may be 2%.

By including the second polyester film more suitable as a sealing surface in addition to the first polyester film, a laminate having low-temperature sealability, acid resistance, and alkali resistance is provided.

The crystallinity of a polyester film can be adjusted by changing the type of monomers used for copolymerization. The crystallinity of a polyester film can also be adjusted by changing a cooling rate during production of the polyester film to adjust the extent to which the crystallization thereof proceeds. The crystallinity of a deposited polyester film can also be adjusted by heat-treating the film. The crystallinity of a polyester film can also be adjusted by changing deposition conditions such as a heat-setting temperature and a stretch ratio. A polyester film may be produced, for example, by polycondensation of diols and dicarboxylic acids.

Diols may be aliphatic diols or alicyclic diols, and examples thereof include compounds such as ethylene glycol, diethylene glycol, triethylene glycol, 1,2-propylene glycol, 1,3-propylene glycol, dipropylene glycol, trimethylene glycol, tetramethylene glycol, pentamethylene glycol, hexamethylene glycol, octamethylene glycol, nonamethylene glycol, decamethylene glycol, neopentyl glycol, 1,4-butanediol, and 1,4-cyclohexanedimethanol. These compounds may be used alone or in combination of two or more. From the viewpoint of reducing the environmental load, a biomass-derived ethylene glycol may be used.

Dicarboxylic acids may be aliphatic dicarboxylic acids, alicyclic dicarboxylic acids, aromatic dicarboxylic acids, or the like. Examples thereof include compounds such as oxalic acid, malonic acid, succinic acid, glutaric acid, adipic acid, pimelic acid, suberic acid, glutaconic acid, azelaic acid, sebacic acid, nonanedicarboxylic acid, decanedicarboxylic acid, undecanedicarboxylic acid, dodecanedicarboxylic acid, maleic acid, fumaric acid, mesaconic acid, citraconic acid, itaconic acid, isophthalic acid, terephthalic acid, n-dodecyl succinic acid, n-dodecenyl succinic acid, cyclohexanedicarboxylic acid, an anhydride of these acids, and a lower alkyl ester of these acids. These compounds may be used alone or in combination of two or more.

To sufficiently perform functions as a sealant layer, the polyester film may be a film of, for example, polybutylene terephthalate, polybutylene naphthalate, or polyethylene terephthalate.

From the viewpoint of reducing the environmental load, the sealant layer may contain a regenerated polyester resin. Examples of regenerated polyester resins include chemically recycled polyester resins, which are produced by chemically recycling containers made from a polyester resin composed primarily of ethylene terephthalate units, and mechanically recycled polyester resins, which are produced by mechanically recycling containers made from a polyester resin composed primarily of ethylene terephthalate units.

The sealant layer may further include other polyester films in addition to the first and second polyester films. In this case, the other polyester films may be the same as or different from each other. When the sealant layer includes two or more polyester films in addition to the first and second polyester films, the polyester film to be the innermost layer of a packaging bag or the like needs to be the first polyester film, which has a crystallinity of 20 to 50%, or the second polyester film having a crystallinity of 15% or less.

The polyester films constituting the sealant layer may contain various types of additives such as a flame retardant, slip agent, anti-blocking agent, antioxidant, light stabilizer, and tackifier.

From the viewpoint of ensuring excellent strength and filling suitability, the thickness of the sealant layer may be preferably 15 µm or more, more preferably 15 to 100 µm, and even more preferably 20 to 60 µm. The sealant layer having a thickness of less than 15 µm tends to have insufficient seal strength depending on the size of the laminate or the amount of contents. Such a sealant layer also tends to increase the mass ratio of an adhesive or ink in the laminate. In the case where the sealant layer includes a plurality of polyester films, the total thickness of these films may be within the above range.

In the case where the sealant layer includes the first and second polyester films and these films each have a thickness of 5 µm or more, the second polyester film, which is to form a sealing surface, allows excellent sealability to be easily ensured, and the first polyester film allows excellent acid resistance and alkali resistance to be easily ensured. From this viewpoint, the thickness of the second polyester film may be preferably 10 µm or more and more preferably 15 µm or more, and the thickness of the first polyester film may be preferably 10 µm or more and more preferably 15 µm or more.

The laminate may have a water vapor transmission rate of 5 g/m²/day or less. The laminate may have an oxygen transmission rate of 1 cc/m²/day or less. These configurations prevent the contents from being deteriorated by water vapor or oxygen, making it possible to maintain the quality of the contents for the long term. From this viewpoint, the water vapor transmission rate of the laminate may be preferably 1 g/m²/day or less and more preferably 0.5 g/m²/day or less. In addition, the oxygen transmission rate of the laminate may be preferably 0.5 cc/m²/day or less and more preferably 0.2 cc/m²/day or less. Note that when the laminate further includes a metal layer, the water vapor transmission rate and oxygen transmission rate tend to be reduced.

The laminate is suitable for forming a bag for use as packaging of acidic or alkaline substances. The acidic substances may have a pH less than or equal to 6.5 or 6. The alkaline substances may have a pH greater than or equal to 7.5 or 8. Examples of the above substances include liquid products such as liquid seasonings, toiletries, and liquid detergents. The laminate described above can be used to produce a packaging bag having excellent preservability of not only acidic foods, such as table vinegar and lemon juice, but also shampoo or alkaline detergents containing a surfactant (i.e., having high penetration of components).

The laminate may be formed, for example, by laminating a substrate layer and a sealant layer with an adhesive layer interposed therebetween. These layers may be laminated by, for example, dry lamination.

In the case where the laminate further includes a metal layer, the metal layer may be laminated on the substrate layer by dry lamination as mentioned above, thus producing a laminate that includes a substrate layer, adhesive layer, metal layer, adhesive layer, and sealant layer.

In the case where the sealant layer includes a plurality of polyester films, polyesters may be co-extruded for lamination, and the resulting film may be prepared as the sealant layer. Layers (films) of the same type of resin generally tend to have a greater interlayer strength when laminated by co-extrusion than when laminated by dry lamination. The interlayer strength affects a seal strength and a compressive strength, and thus co-extrusion is suitable.

A packaging bag is obtained by heat sealing facing sealant layers of laminates. A packaging bag may be obtained, for example, by heat sealing three edges of laminates with their sealant layers facing each other. Further, a package is obtained by filling the packaging bag with substances and sealing the bag. A package may be obtained, for example, by filling the packaging bag with substances through the remaining edges of the laminates, which have not been heat sealed, and then heat sealing the remaining edges.

### [Examples]

The present invention will be described in more detail using the following examples, but the present invention is not limited to the examples.

### [Production of Sealant film]

Resins for forming polyester films were prepared using monomers listed in Table 1 as starting materials. In Table 1, TPA refers to terephthalic acid, EG refers to ethylene glycol, PG refers to neopentyl glycol, BDO refers to 1,4-butanediol, DEG refers to diethylene glycol, and CHDM refers to 1,4-cyclohexanedimethanol.

**[Table 1]**

| | Carboxylic acid component | Diol component | | | | |
|---|---|---|---|---|---|---|
| | TPA | EG | NPG | BDO | DEG | CHDM |
| Resin 1 | 100 | 60 | - | - | 5 | 35 |
| Resin 2 | 100 | 80 | - | - | 5 | 15 |
| Resin 3 | 100 | 70 | 19 | 9 | 2 | - |

### Sealant film A:

The resin 2 was extruded by casting and the extruded film was stretched in a film feeding direction (hereafter "MD") at a stretch ratio of 3 to obtain a sealant film A. The extruded film was stretched to have a thickness of 30 µm.

### Sealant film B:

The sealant film A was fed through a roll-to-roll drying oven to obtain a sealant film B. The temperature in the drying oven was set to 170°C, and the feeding speed was adjusted so that the film was heated for one minute.

### Sealant film C1:

The resin 3 was extruded by casting and the extruded film was stretched in the MD at a stretch ratio of 3 to obtain a sealant film C1. The extruded film was stretched to have a thickness of 30 µm.

### Sealant film C2:

A sealant film C2 was obtained using the same method as for the sealant film C1 except that the extruded film was stretched to have a thickness of 15 µm.

### Sealant film D:

The sealant film C1 was fed through a roll-to-roll drying oven to obtain a sealant film D. The temperature in the drying oven was set to 170°C, and the feeding speed was adjusted so that the film was heated for one minute.

### Sealant film E:

The resin 2 and resin 3 were co-extruded by casting and the extruded film was stretched in the MD at a stretch ratio of 3 to obtain a two-layered sealant film E. The surface of the layer of extruded resin 2 was selected to be the sealing surface. The extruded film was stretched to cause the layers of the resin 2 and resin 3 to have a thickness of 15 µm.

### Sealant film F1:

The resin 1 and resin 3 were co-extruded by casting and the extruded film was stretched in the MD at a stretch ratio of 3 to obtain a two-layered sealant film F1. The surface of the layer of extruded resin 1 was selected to be the sealing surface. The extruded film was stretched to cause the layers of the resin 2 and resin 3 to have a thickness of 15 µm.

### Sealant film F2:

A sealant film F2 was obtained using the same method as for the sealant film F1 except that the extruded film was stretched to cause each layer of the sealant film F2 to have a thickness of 10 µm.

### Sealant film F3:

A sealant film F3 was obtained using the same method as for the sealant film F1 except that the layer of the resin 1 was formed to have a thickness of 15 µm and the layer of the resin 3 was formed to have a thickness of 5 µm.

### Sealant film F4:

A sealant film F4 was obtained using the same method as for the sealant film F1 except that the layer of the resin 1 was formed to have a thickness of 5 µm and the layer of the resin 3 was formed to have a thickness of 15 µm.

### Sealant film G:

The resin 1 was extruded by casting and the extruded film was stretched in the MD at a stretch ratio of 3 to obtain a sealant film G. The extruded film was stretched to have a thickness of 30 µm.

### Sealant film H:

The sealant film C1 was fed through a roll-to-roll drying oven to obtain a sealant film H. The temperature in the drying oven was set to 170°C, and the feeding speed was adjusted so that the film was heated for three minutes.

### (Measurement of crystallinity of polyester film)

The crystallinity of each polyester film constituting the respective sealant films was measured. Specifically, the crystallinity of each polyester film was measured by a process including performing FT-IR analysis using a reflection method and determining crystallinity using the formulas (1) and (2) below. Firstly, a commercially available A-PET film and a commercially available crystalline stretched PET film were subjected to FT-IR analysis using a reflection method, and values of absorbance I₁₃₄₀, I₁₃₇₀, and I₁₄₀₉ were substituted into the following Formula 1, and simultaneous equations were solved to determine a first constant p1 and a second constant p2. Subsequently, the produced sealant films were subjected to FT-IR analysis using a reflection method, and values of absorbance I₁₃₄₀ and I₁₄₀₉ and the first constant p1 determined as above were substituted into the following Formula 2 to calculate crystallinity. ${I}_{1409} = p 1 \times {I}_{1340} + p 2 \times {I}_{1370}$ (Formula 1) $C = p 1 \times \left({I}_{1340}/{I}_{1409}\right) \times 100$ (Formula 2) where
C represents the crystallinity in percent,
I₁₄₀₉ represents absorbance at a wavenumber of 1409 cm⁻¹,
I₁₃₇₀ represents absorbance at a wavenumber of 1370 cm⁻¹, and
I₁₃₄₀ represents absorbance at a wavenumber of 1340 cm⁻¹.

The FT-IR analysis using a reflection method was performed on the sealant film as follows.

The measurement surface of the sealant film was brought into contact with a prism, and the absorbance of the sealant film was measured using a single-reflection ATR measuring device. The prism was germanium (Ge). The absorbance of the polyester film at each peak was calculated using, as a baseline (zero point), a straight line connecting a first point and a second point, the first point indicating the absorbance at a wavenumber from which the peak of a wavenumber of 1409 cm⁻¹ rose from the high-wavenumber side of the absorption spectrum, the second point indicating the absorbance at a wavenumber from which the peak of a wavenumber of 1340 cm⁻¹ rose from the low-wavenumber side of the absorption spectrum.

### [Production of laminate]

### [Example 1 - Example 5 are not part of the invention]

### [Example 1]

A 12 µm crystalline stretched PET film as a base film, an aluminum foil having a thickness of 9 µm, and a sealant film B were prepared, and these were laminated on each other by dry lamination to obtain a laminate. A general-purpose urethane adhesive was used for dry lamination. The amount of coating of the urethane adhesive was adjusted so that the adhesive would have a thickness of 3g/m² (thickness of 3 µm) after drying.

### [Example 2]

A laminate was obtained using the same method as for Example 1 except that a sealant film C1 was used instead of the sealant film B.

### [Example 3]

A 12 µm crystalline stretched PET film was prepared as a base film, and a silica deposited film was provided on one surface of the PET film as a barrier layer to obtain a barrier film. A surface of the silica deposited film of the barrier film and the sealant film C1 were laminated on each other by dry lamination to obtain a laminate. A general-purpose urethane adhesive was used for dry lamination. The amount of coating of the urethane adhesive was adjusted so that the adhesive would have a thickness of 3g/m² (thickness of 3 µm) after drying.

### [Example 4]

A laminate was obtained using the same method as for Example 3 except that the sealant film D was used instead of the sealant film C1.

### [Example 5]

A laminate was obtained using the same method as for Example 3 except that a sealant film C2 was used instead of the sealant film C1.

### [Example 6]

A laminate was obtained using the same method as for Example 3 except that a sealant film E was used instead of the sealant film C1.

### [Example 7]

A laminate was obtained using the same method as for Example 3 except that a sealant film F1 was used instead of the sealant film C1.

### [Example 8]

A laminate was obtained using the same method as for Example 3 except that a sealant film F2 was used instead of the sealant film C1.

### [Example 9]

A laminate was obtained using the same method as for Example 3 except that a sealant film F3 was used instead of the sealant film C1.

### [Example 10]

A laminate was obtained using the same method as for Example 3 except that a sealant film F4 was used instead of the sealant film C1.

### [Comparative Example 1]

A laminate was obtained using the same method as for Example 3 except that a sealant film A was used instead of the sealant film C1.

### [Comparative Example 2]

A laminate was obtained using the same method as for Example 3 except that a sealant film G was used instead of the sealant film C1.

### [Comparative Example 3]

A laminate was obtained using the same method as for Example 3 except that a sealant film H was used instead of the sealant film C1.

### [Evaluations]

The laminates thus obtained were subjected to various evaluations. The results are shown in Tables 2 and 3.

### (Measurement of seal strength)

Sealant layers of two pieces of each laminate were heat sealed under the conditions that a temperature was 160°C, 180°C, and 200°C, an air pressure was 0.2 MPa, and a sealing time was one minute. The seal strength of the heat-sealed sealant layers of each laminate was measured according to JIS K7127.

### (Measurement of oxygen transmission rate and water vapor transmittance rate)

An oxygen transmittance rate and a water vapor transmission rate of each laminate were measured according to JIS K7126B.

### (Pressure resistance test)

Two 90 mm-square pieces were cut from each laminate, three edges of the two pieces of each laminate were sealed with their sealant layers facing each other, 30 grams of substances were filled therein, and the remaining edges of the pieces were sealed. The sealing conditions were the same as those used when the highest seal strength was obtained in the measurement of seal strength described above. The seal width was set to 5 mm from the periphery of the pieces.

As substances to be filled, alkaline detergents (pH = 11), alkaline detergents (pH = 8), water (pH = 7), shampoo (pH = 6), acidic detergents (pH = 3), and table vinegar (pH = 3) were prepared.

The packages containing these substances were evaluated according to the following criteria.

### Evaluation criteria (pressure resistance):

A rating: having resistance to a dynamic load of 300 kgf or more during dynamic load testing
B rating: having resistance to a dynamic load of less than 300 kgf during dynamic load testing, and not broken when subjected to a static load of 100 kg for one minute during static load testing
C rating: broken when subjected to a static load of 100 kg for one minute during static load testing

The static load testing was performed according to JIS Z 0238. During the dynamic load testing, the package was compressed at a rate of 10 mm/min, and the maximum dynamic load applied to the package at break was recorded.

**[Table 2]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Substrate layer | | PET | PET | PET with vapor deposited layer of inorganic oxide | PET with vapor deposited layer of inorganic oxide | PET with vapor deposited layer of inorganic oxide | PET with vapor deposited layer of inorganic oxide | PET with vapor deposited layer of inorganic oxide | PET with vapor deposited layer of inorganic oxide | PET with vapor deposited layer of inorganic oxide | PET with vapor deposited layer of inorganic oxide |
| Metal layer | | AL | AL | - | - | - | - | - | - | - | - |
| Type of sealant film | | B | C1 | C1 | D | C2 | E | F1 | F2 | F3 | F4 |
| Crystallinity/thickness of sealant film | | 20%/30µm | 40%/30µm | 40%/30µm | 50%/30µm | 40%/15µm | 40%/15µm | 40%/15µm | 40%/10µm | 40%/5 µm | 40%/15µm |
| | | | | | | | 15%/15µm | 10%/15µm | 10%/10µm | 10%/15µm | 10%/5 µm |
| Oxygen transmission rate | cc/m²/day | 0.05> | 0.05> | 0.2 | 0.2 | 0.2 | 0.2 | 0.2 | 0.2 | 0.2 | 0.2 |
| Water vapor transmission rate | g/m²/day | 0.01> | 0.01> | 0.5 | 0.5 | 0.5 | 0.5 | 0.5 | 0.5 | 0.5 | 0.5 |
| Seal strength when heat sealed at 160°C | N/15 mm | 1> | 1> | 1> | 1> | 1> | 12 | 20 | 16 | 18 | 8 |
| Seal strength when heat sealed at 180°C | N/15 mm | 10 | 8 | 13 | 1> | 6 | 20 | 25 | 18 | 20 | 9 |
| Seal strength when heat sealed at 200°C | N/15 mm | 23 | 22 | 23 | 15 | 13 | 23 | 22 | 16 | 18 | 9 |
| Pressure resistance test | Alkaline detergent (pH = 11) | B | B | B | B | B | B | B | B | B | B |
| | Alkaline detergent (pH = 8) | B | A | A | B | B | A | A | B | B | B |
| | Water (pH = 7) | A | A | A | A | A | A | A | A | A | B |
| | Shampoo (pH = 6) | A | A | A | A | A | A | A | A | A | B |
| | Acidic detergent (pH = 3) | B | A | A | B | B | A | A | A | A | B |
| | Table vinegar (pH = 3) | B | A | A | B | B | A | A | A | A | B |

**[Table3]**

| | | Comparative Example 1 | Comparative Example 2 | Comparative Example 3 |
|---|---|---|---|---|
| Substrate layer | | PET with vapor deposited layer of inorganic oxide | PET with vapor deposited layer of inorganic oxide | PET with vapor deposited layer of inorganic oxide |
| Metal layer | | - | - | - |
| Type of sealant film | | A | G | H |
| Crystallinity/thickness of sealant film | | 15%/30µm | 10%/30µm | 60%/30µm |
| Oxygen transmission rate | cc/m²/day | 0.2 | 0.2 | 0.2 |
| Water vapor transmission rate | g/m²/day | 0.5 | 0.5 | 0.5 |
| Seal strength when heat sealed at 160°C | N/15 mm | 11 | 20 | 1> |
| Seal strength when heat sealed at 180°C | N/15 mm | 15 | 24 | 1> |
| Seal strength when heat sealed at 200°C | N/15 mm | 23 | 30 | 3 |
| Pressure resistance test | Alkaline detergent (pH = 11) | C | C | C |
| | Alkaline detergent (pH = 8) | C | C | C |
| | Water (pH = 7) | A | A | C |
| | Shampoo (pH = 6) | C | C | C |
| | Acidic detergent (pH = 3) | C | C | C |
| | Table vinegar (pH = 3) | C | C | C |

### [Industrial Applicability]

Laminates according to the present invention can be used to obtain a packaging bag having excellent low adsorptivity, excellent sealability, and excellent resistance to substances. Furthermore, substantially all of the constituent films of the laminates can be polyester films. Such a laminate can be referred to as a packaging material composed of a single material (mono-material) and thus is expected to have excellent recyclability.

### [Reference Signs List]

- 1: Substrate layer
- 2: Adhesive layer
- 3: Sealant layer
- 3a: First polyester film
- 3b: Second polyester film
- 10, 20: Laminate

## Claims

1. A laminate for forming a bag for use as packaging of an acidic or alkaline substance, the laminate comprising, in sequence:
a substrate layer;
an adhesive layer; and
a sealant layer,
wherein
the sealant layer includes a first polyester film and a second polyester film,
the second polyester film is so disposed as to be farther away from the adhesive layer than the first polyester film,
the first polyester film has a crystallinity of 20 to 50%, the crystallinity of the first polyester film being defined based on a first absorbance at a first wavenumber of 1409 cm⁻¹, a second absorbance at a second wavenumber of 1370 cm⁻¹, a third absorbance at a third wavenumber of 1340 cm⁻¹, a first constant, and a second constant, the first to third absorbances and the first and second constants being determined based on Fourier transform infrared (FT-IR) analysis, which uses a reflection method, on at least the first polyester film, the crystallinity of the first polyester film being expressed in accordance with the following formulas (1) and (2): ${I}_{1409} = p 1 \times {I}_{1340} + p 2 \times {I}_{1370}$ (Formula 1) $C = p 1 \times \left({I}_{1340}/{I}_{1409}\right) \times 100$ (Formula 1)
where
C represents the crystallinity in percent,
I₁₄₀₉ represents the first absorbance at the first wavenumber,
I₁₃₇₀ represents the second absorbance at the second wavenumber,
I₁₃₄₀ represents the third absorbance at the third wavenumber,
p1 represents the first constant, and
p2 represents the second constant, and
the second polyester film has a crystallinity of 15% or less

2. The laminate according to claim 1, wherein the sealant layer has a thickness of 15 µm or more.

3. The laminate according to claim 1, wherein the first polyester film and the second polyester film both have a thickness of 5 µm or more.

4. The laminate according to any one of claims 1 to 3, wherein the substrate layer is comprised of a third polyester film.

5. The laminate according to claim 4, wherein the third polyester film of the substrate layer has a first surface and a second surface opposite to the first surface and has a vapor deposited layer of inorganic oxide disposed on at least one of the first surface and the second surface.

6. The laminate according to any one of claims 1 to 5, wherein the laminate has a water vapor transmission rate of 5 g/m²/day or less, measured according to JIS K7126B.

7. The laminate according to any one of claims 1 to 6, wherein the laminate has an oxygen transmission rate of 1 cc/m²/day or less, measured according to JIS K7126B.

8. The laminate according to any one of claims 1 to 7, wherein the substance contains a surfactant.

## Patentansprüche

1. Laminat zum Bilden eines Beutels zur Verwendung als Verpackung für eine saure oder alkalische Substanz, wobei das Laminat in dieser Reihenfolge umfasst:
eine Substratschicht;
eine Klebeschicht; und
eine Abdichtschicht,
wobei
die Abdichtschicht einen ersten Polyesterfilm und einen zweiten Polyesterfilm einschließt,
der zweite Polyesterfilm so angeordnet ist, dass er weiter von der Klebeschicht entfernt ist als der erste Polyesterfilm,
der erste Polyesterfilm eine Kristallinität von 20 bis 50 % aufweist, wobei die Kristallinität des ersten Polyesterfilms auf Basis einer ersten Absorption bei einer ersten Wellenzahl von 1409 cm⁻¹, einer zweiten Absorption bei einer zweiten Wellenzahl von 1370 cm⁻¹, einer dritten Absorption bei einer dritten Wellenzahl von 1340 cm⁻¹, einer ersten Konstante und einer zeiten Konstante definiert ist, wobei die erste bis dritte Absorption und die erste und zweite Konstante auf Basis einer Fourier-Transform-Infrarot (FT-IR)-Analyse, die ein Reflexionsverfahren verwendet, an mindestens dem ersten Polyesterfilm bestimmt werden, wobei die Kristallinität des ersten Polyesterfilms gemäß den folgenden Formeln (1) und (2) ausgedrückt wird: ${I}_{1409} = p 1 \times {I}_{1340} + p 2 \times {I}_{1370}$ (Formel 1) $C = p 1 \times \left({I}_{1340}/{I}_{1409}=\right) \times 100$ (Formel 2)
wobei
C die Kristallinität in Prozent darstellt,
I₁₄₀₉ die erste Absorption bei der ersten Wellenzahl darstellt,
I₁₃₇₀ die zweite Absorption bei der zweiten Wellenzahl darstellt,
I₁₃₄₀ die dritte Absorption bei der dritten Wellenzahl darstellt,
p1 die erste Konstante darstellt und
p2 die zweite Konstante darstellt, und
der zweite Polyesterfilm eine Kristallinität von 15 % oder weniger aufweist.

2. Laminat gemäß Anspruch 1, in dem die Abdichtschicht eine Dicke von 15 µm oder mehr aufweist.

3. Laminat gemäß Anspruch 1, in dem der erste Polyesterfilm und der zweite Polyesterfilm beide eine Dicke von 5 µm oder mehr aufweisen.

4. Laminat gemäß mindestens einem der Ansprüche 1 bis 3, in dem die Substratschicht einen dritten Polyesterfilm umfasst.

5. Laminat gemäß Anspruch 4, in dem der dritte Polyesterfilm der Substratschicht eine erste Oberfläche und eine zweite Oberfläche entgegengesetzt zu der ersten Oberfläche aufweist und eine Dampfabscheidungsschicht aus anorganischem Oxid auf mindestens einer der ersten Oberfläche und der zweiten Oberfläche angeordnet ist.

6. Laminat gemäß mindestens einem der Ansprüche 1 bis 5, wobei das Laminat eine Wasserdampfdurchlässigkeitsrate von 5 g/m²/Tag oder weniger, gemessen gemäß JIS K7126B, aufweist.

7. Laminat gemäß mindestens einem der Ansprüche 1 bis 6, wobei das Laminat eine Sauerstoffdurchlässigkeitsrate von 1 cc/m²/Tag oder weniger, gemessen gemäß JIS K7126B, aufweist.

8. Laminat gemäß mindestens einem der Ansprüche 1 bis 7, wobei die Substanz ein Tensid enthält.

## Revendications

1. Stratifié pour former un sac destiné au conditionnement d'une substance acide ou alcaline, le stratifié comprenant, dans l'ordre :
une couche de substrat ;
une couche adhésive ; et
une couche d'étanchéité,
dans lequel la couche d'étanchéité inclut un premier film polyester et un deuxième film polyester,
le deuxième film polyester est disposé de manière à être plus éloigné de la couche adhésive que le premier film polyester,
le premier film polyester présente une cristallinité de 20 à 50 %, la cristallinité du premier film polyester étant définie sur la base d'une première absorbance à un premier nombre d'onde de 1409 cm⁻¹, d'une deuxième absorbance à un deuxième nombre d'onde de 1370 cm⁻¹, d'une troisième absorbance à un troisième nombre d'onde de 1340 cm⁻¹, d'une première constante, et d'une deuxième constante, les première à troisième absorbances et les première et deuxième constantes étant déterminées sur la base d'une analyse infrarouge à transformée de Fourier (FT-IR), qui utilise une méthode par réflexion, sur au moins le premier film polyester, la cristallinité du premier film polyester étant exprimée conformément aux formules (1) et (2) suivantes : ${I}_{1409} = p 1 \times + p 2 \times {I}_{1370}$ (Formule 1) $C = p 1 \times \left({I}_{1340}/{I}_{1409}\right) \times 100$ (Formule 2)
où C représente la cristallinité en pourcentage,
I₁₄₀₉ représente la première absorbance au premier nombre d'onde,
I₁₃₇₀ représente la deuxième absorbance au deuxième nombre d'onde,
I₁₃₄₀ représente la troisième absorbance au troisième nombre d'onde,
p1 représente la première constante, et
p2 représente la deuxième constante, et
le deuxième film polyester présente une cristallinité de 15 % ou moins.

2. Stratifié selon la revendication 1, dans lequel la couche d'étanchéité présente une épaisseur de 15 µm ou plus.

3. Stratifié selon la revendication 1, dans lequel le premier film polyester et le deuxième film polyester présentent tous deux une épaisseur de 5 µm ou plus.

4. Stratifié selon l'une quelconque des revendications 1 à 3, dans lequel la couche de substrat est constituée d'un troisième film polyester.

5. Stratifié selon la revendication 4, dans lequel le troisième film polyester de la couche de substrat présente une première surface et une deuxième surface opposée à la première surface et présente une couche déposée en phase vapeur d'un oxyde inorganique disposée sur au moins l'une de la première surface et de la deuxième surface.

6. Stratifié selon l'une quelconque des revendications 1 à 5, dans lequel le stratifié présente un taux de transmission de vapeur d'eau de 5 g/m²/jour ou moins, mesuré selon la norme JIS K7126B.

7. Stratifié selon l'une quelconque des revendications 1 à 6, dans lequel le stratifié présente un taux de transmission de l'oxygène de 1 cc/m²/jour ou moins, mesuré selon la norme JIS K7126B.

8. Stratifié selon l'une quelconque des revendications 1 à 7, dans lequel la substance contient un tensioactif.
